Europäisches Patentamt

European Patent Office

Office européen des brevets

(19)

(11) Numéro de publication: **0 057 670**
**B1**

(12) **FASCICULE DE BREVET EUROPEEN**

(45) Date de publication du fascicule du brevet: **03.09.86**

(21) Numéro de dépôt: **82810041.2**

(22) Date de dépôt: **01.02.82**

(51) Int. Cl.⁴: **B 01 D 29/46**

(54) **Filtre à disques pour liquides.**

(30) Priorité: **04.02.81 CH 744/81**

(43) Date de publication de la demande:
**11.08.82 Bulletin 82/32**

(45) Mention de la délivrance du brevet:
**03.09.86 Bulletin 86/36**

(84) Etats contractants désignés:
**AT BE CH DE FR GB IT LI LU NL SE**

(56) Documents cités:
**CH-A- 438 220
DE-B-1 025 834
FR-A-2 353 325
US-A-2 720 314**

(73) Titulaire: **Doucet, Charles
20, avenue Tronchet
CH-1226 Thônex (CH)**

(72) Inventeur: **Doucet, Charles
20, avenue Tronchet
CH-1226 Thônex (CH)**

(74) Mandataire: **Kirker, Gaylord Emile et al
c/o KIRKER & Cie S.A. 14, Rue du Mont-Blanc
Case postale 872
CH-1211 Genève 1 (CH)**

Courier Press, Leamington Spa, England.

**Description**

Les filtres rapides connus utilisent en général comme écran de filtration, soit des treillis (toiles métalliques tissées), soit des tôles perforées, soit des grilles composées de fils à profils divers, soit enfin des empilements rigides de rondelles, plaques ou disques, sans profil hydraulique spécial.

Les inconvénients de ces constructions sont les suivants:

Avec les treillis, les tôles perforées (ou cylindres perforés) et les grilles, au cours du nettoyage par inversion de courant ou back-wash, qui représente le système le plus employé, les fibres qui peuvent se trouver dans le liquide se faufilent autour des passages, car une fibre ne repassera pas lors du nettoyage par le même trou ou fente que celui par lequel elle est déjà passée lors de la filtration et ceci provoque le "feutrage" des corps filtrants qu'il faut alors changer.

Avec tous les éléments filtrants à action directe, c'est-à-dire sans lit de sable ou sans pré-couche, les passages se trouvent en surface et les impuretés de dimensions et de formes variées les colmatent en se plaçant les unes à côté des autres.

Les profils hydrauliques des corps filtrants ne sont pas étudiés pour donner un minimum de perte de charge et pour éliminer les turbulences qui favorisent toujours les dépôts d'impuretés.

Tandis que les impuretés de dimensions supérieures au vide de maille ou à la perforation restent en amont de la surface filtrante, et que les impuretés de dimensions inférieures passent au travers des mailles ou des fentes, une quantité de particules ayant sensiblement les dimensions des orifices de passage se fixent et se coincent entre les fils, les barres ou les bords de ces orifices, provoquant ainsi petit à petit le colmatage de tout l'élément filtrant malgré les systèmes mis en oeuvre pour le nettoyage.

On connaît aussi des filtres du type à nettoyage à contre-courant, formés par un ressort hélicoïdal dont on peut faire varier la longueur et, par conséquent, la distance entre spires, pour passer du régime de filtration, où les spires sont rapprochées, au régime de nettoyage, où les spires sont écartées, et inversément (DE—B—25 45 684 et DE—A—26 28 237).

Les filtres de ce type de construction ont toutefois le défaut qu'il n'est pas possible en pratique d'obtenir que la distance entre spires qui est requise pour assurer un degré de filtration donné, soit effectivement réalisée et, surtout, soit constante sur toute la longueur du filtre.

On connaît encore (demande de brevet français FR—A—2353325) une construction dans laquelle des éléments de filtration annulaires assurent entre eux des passages circulaires grâce à des éléments d'espacement élastiquement compressibles disposés entre eux. Toutefois, dans cette construction connue, on emploie des tiges de guidage traversant ces éléments de filtration, pour assurer leur maintien en position correcte.

Or, lorsqu'on fait varier la distance entre ces éléments, pour passer de la position de filtration à celle de nettoyage et inversement, les éléments de filtration glissent légèrement le long des tiges de guidage et tendent à coincer sur ces tiges, si bien que l'égalité des passages de filtration n'est pas garantie du tout. Par ailleurs, les éléments d'espacement sont de petits cylindres qui, lorsqu'on les comprime, ne peuvent se déformer qu'en formant une sorte de collerette qui s'engage entre les éléments de filtration contigus. A la longue ces collerettes, comprimées entre ces éléments, se détériorent, ce qui contribue aussi à créer une irrégularité dans les dimensions des passages de filtration.

La présente invention vise à fournir un filtre exempt de tous les inconvénients qui viennent d'être mentionnés, des différents types de filtres connus à nettoyage à contre-courant et à cet effet elle a pour objet un filtre selon la revendication 1.

Les dessin annexés représentent, à titre d'exemples, plusieurs formes d'exécution du filtre selon l'invention.

Figures 1 et 2 sont des vues schématiques en coupe partielle illustrant le principe et le fonctionnement du filtre selon l'invention.

Figures 3 et 4 sont respectivement des vues analogues aux figures 1 et 2 mais montrant la construction grâce à laquelle le fonctionnement illustré par les figures 1 et 2, est effectivement réalisé.

Figure 5 est une vue en coupe axiale d'une première forme d'exécution.

Figure 6 est une vue en coupe axiale d'une seconde forme d'exécution.

Figure 7 est une vue en coupe axiale d'une troisième forme d'exécution.

Figure 8 est une vue en coupe axiale d'une quatrième forme d'exécution, montrant les organes en position de filtration.

Figure 9 est une vue analogue à la figure 8, mais montrant les organes de la quatrième forme d'exécution en position de nettoyage à contre-courant.

Figure 10 est une vue en coupe selon 10—10 de fig. 8 et 9.

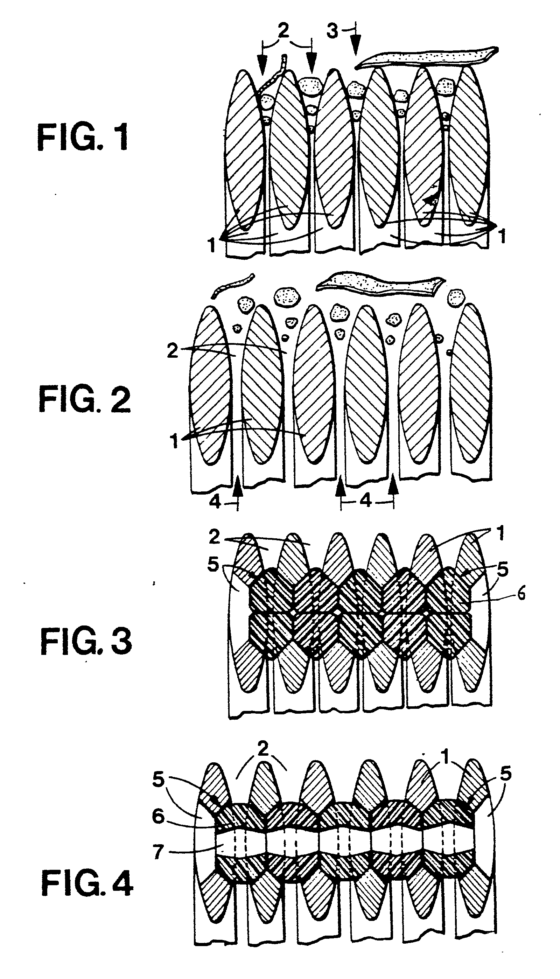

Les figures 1 et 2 représentent une partie d'un filtre formé d'une série d'éléments de filtration 1 formés chacun d'un anneau présentant en section transversale une forme lenticulaire, hydrodynamique. Sur la figure 1, les éléments 1 sont en position de filtration, pour laquelle ils sont rapprochées de façon à laisser entre eux des fentes ou passages de filtration 2 de section décroissante dans lesquels le liquide à filtrer s'écoule dans le sens centripète comme l'indique la flèche 3. Cette forme permet d'obtenir automatiquement une stratification des corps et particules solides dans les fentes annulaires 2, les corps les plus petits étant retenus au "fond" et les plus gros à distance du "fond" du passage de filtration, comme illustré sur la figure 1. De ce fait il est possible d'absorber davantage d'impuretés pour une surface donnée. De plus la forme hydrodynamique de la section transversale des anneaux 1 évite les turbulences et la cavitation du liquide et améliore le rendement.

La figure 2 représente la même partie du filtre pendant l'opération de nettoyage à contre-courant. Les éléments 1 sont alors davantage espacés que dans le cas de la figure 1 et du liquide préalablement filtré traverse les fentes 2 de façon centrifuge comme l'indiquent les flèches 4. Il est clair qu'alors tous les corps et particules qui avaient été retenus par les éléments 1 durant la phase de filtration, sont détachés de ces éléments et sont entraînés par le liquide de nettoyage.

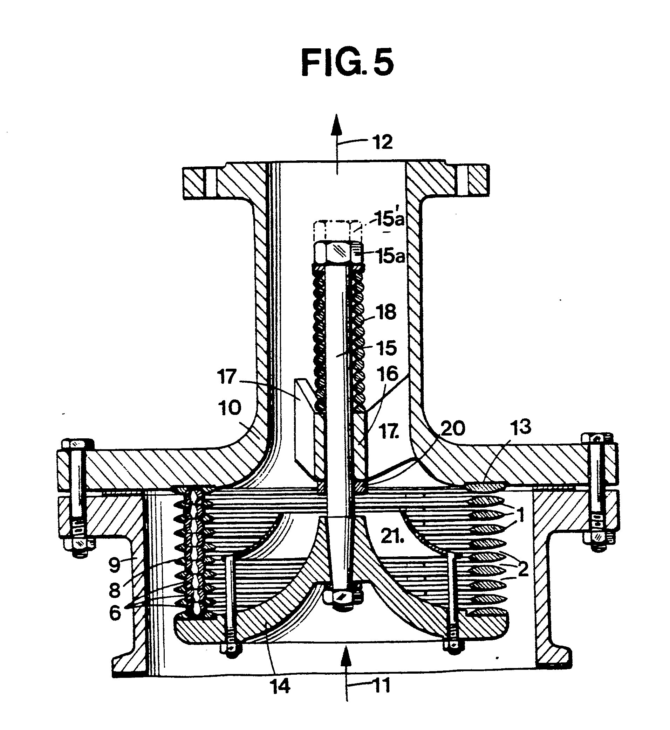

Ceci étant expliqué pour bien faire comprendre le fonctionnement d'un filtre selon la présente invention, on va décrire maintenant les figures 3 et 4, qui illustrent les moyens grâce auxquels le fonctionnement selon les figures 1 et 2 est obtenu.

Chaque élément de filtration 1 présente sur chacune de ses faces, des alvéoles coniques 5, de préférence au nombre de trois et espacés de 120°. Les alvéoles des différents éléments de filtration sont alignés selon des droites parallèles à l'axe de l'ensemble de forme générale cylindrique constitué par ces éléments de filtration. Entre chaque paire d'alvéoles se faisant face et appartenant à des éléments de filtration contigus, il est disposé un élément d'espacement 6 en matière élastiquement déformable mais pratiquement incompressible, telle que du caoutchouc par exemple. A l'état libre, ces éléments 6 sont sphériques ou ont à peu près la forme visible sur la fig. 4, c'est-à-dire celle d'une sphère tronquée de deux calottes symétriques dont la base a une section plus grande que la section d'un canal axial 7 pratiqué dans chacun des éléments d'espacement 7, parallèlement à l'axe commun de ces éléments, et qui est donc perpendiculaire aux deux plans parallèles que présente extérieurement chaque organe 6. Ces éléments 6 sont placés dans les différents alvéoles 5 -lors du montage- de façon à se toucher par leurs parties planes (c.à.d. les bases de leurs canaux), les canaux 7 étant alors alignés (voir fig. 4).

La figure 4 montre la position écartée au maximum des éléments 1, correspondant au nettoyage à contre-courant selon figure 2. Cet écartement maximum assure le maintien légèrement comprimés et en position correcte des éléments d'espacement 6 dans les alvéoles 5.

On amène les éléments de filtration 1 dans la position rapprochée correspondant au travail de filtration (fig. 1 et 3) simplement en exerçant une pression axiale déterminée sur l'ensemble de ces éléments de filtration 1, de façon à comprimer et déformer élastiquement les éléments 6 de sorte qu'ils prennent, en section transversale, la forme représentée sur la fig. 3, où leur canal 7 (fig. 3) a disparu par déformation des éléments 6, qui se sont aussi quelque peu aplatis dans le sens axial de l'ensemble, permettant ainsi le rapprochement des éléments 1 au degré voulu pour assurer la filtration. Il est clair que l'on peut dans chaque cas concret déterminer par le calcul la force à appliquer pour réaliser l'espacement exact désiré des éléments de filtration.

Lorsqu'on cesse d'exercer la pression qui maintient les éléments de filtration 1 en position de filtration, les éléments élastiques d'espacement 6 reviennent automatiquement à leur position initiale et avec eux les éléments de filtration 1 riviennent en position écartée de nettoyage (fig. 4). Une butée non représentée est de préférence prévue pour limiter l'écrasement des éléments 6 de l'ensemble cylindrique des éléments 1, au degré correspondant à l'espacement voulu de ces éléments 1 pendant la phase de filtration.

Il est à relever que l'épaisseur des éléments de filtration 1 dans le sens de l'écoulement du liquide entre ces éléments, est relativement grande, ce qui a pour avantage d'interdire pratiquement tout faufilage de fibres de longueur normale et, par conséquent, d'éviter le feutrage du filtre.

De plus, les éléments d'espacement 6 agissant, lors de leurs déformations élastiques, sans friction, le déplacement des anneaux 1 est assuré d'une façon qui respecte l'équidistance de ces anneaux. Ainsi on est assuré du maintien constant, à la valeur voulue, de la finesse de filtration.

Il va de soi que, bien qu'on ait décrit dans ce qui précède, le cas d'un filtre à circulation centripète lors de la filtration et centrifuge lors du nettoyage, le fonctionnement serait pareil dans le cas centrifuge à la filtration et centripète au nettoyage à contre-courant, vu la forme lenticulaire de la section des éléments 1.

Dans la forme d'exécution selon fig 5, on voit un corps filtrant 8 de forme générale cylindrique annulaire, formé d'éléments de filtration tels que ceux que l'on vient de décrire en référence aux fig. 2 et 3. Ce corps 8 est disposé dans une enveloppe en deux pièces 9, 10 rendues solidaires. Le corps filtrant 8 est monté en crépine d'aspiration d'une pompe non représentée. Lors de la phase de filtration, le liquide à filtrer est aspiré dans le sens de la flèche 11 tandis que le liquide filtré va à la pompe dans le sens de la flèche 12, après avoir passé de façon centripète à travers les fentes que laissent entre eux les éléments de filtration du corps 8 dont on ne répétera pas la description.

Pour assurer le passage de la phase de filtration à la phase de nettoyage à contre-courant et inversement, les moyens suivants sont prévus.

Le corps 8 est maintenu entre une partie plane 13 de la pièce 10 et une pièce d'appui 14 portée par une tige axiale 15 capable de glisser dans un cylindre de guidage fixe 16 maintenu dans l'axe de la pièce 10 par des bras radiaux 17. Un ressort de compression 18 est disposé autour de la tige 15 et prend appui, d'une part, sur le cylindre fixe 16 et, d'autre part, sur une tête 15a située à l'extrémité libre de la tige 15.

Le fonctionnement est le suivant:

Pendant la phase de filtration, la force du ressort et la pression du liquide arrivant en 11 font que la pièce 14 vient occuper sa position extrême supérieure pour laquelle elle bute contre une butée 20 solidaire du cylindre fixe 16. Les anneaux de filtration sont alors dans leur position rapprochée correspondant au degré de filtration désiré.

Lors de la phase de nettoyage, la pompe s'arrête et la colonne d'eau se trouvant en aval de la pompe redescend et conjointement avec la tension des éléments d'espacement 6, repousse la pièce d'appui 14 vers le bas (à l'encontre de l'action du ressort 18), jusque dans la position représentée, où les spires du ressort font contact entre elles et limitent ainsi la descente de cette pièce 14.

Pour assurer que le liquide de nettoyage agisse de façon pratiquement égale sur toute la longueur (dans le sens axial) du corps 8, il est prévu dans l'espace situé à l'intérieur de ce corps, un déflecteur annulaire profilé 21 disposé axialement et solidaire de la pièce 14, elle-même aussi profilée, pour assurer un écoulement favorable du liquide de nettoyage en direction des fentes du corps 8. Sans la présence de ce déflecteur 21, il se produirait que par effet dynamique une pression supérieure serait créée dans l'intérieur de la région basse du corps 8 et une pression faible à l'autre bout. Le nettoyage ne serait efficace que dans cette région inférieure.

Rien n'empêche de mettre plusieurs déflecteurs, selon la longueur (axiale) du corps 8.

Lorsqu'on remet la pompe en marche, le ressort et la pression de l'eau entrant en 11 ramènent les organes en position de filtration. La tête 15a revient alors en 15'a.

Si l'on veut arrêter l'écoulement du liquide lorsque la pompe ne travaille pas, on ferme une vanne (non représentée) disposée à la bride supérieure de la pièce 10. Bien entendu, il n'y a pas, dans ce cas, de clapet de pied ou de clapet anti-retour.

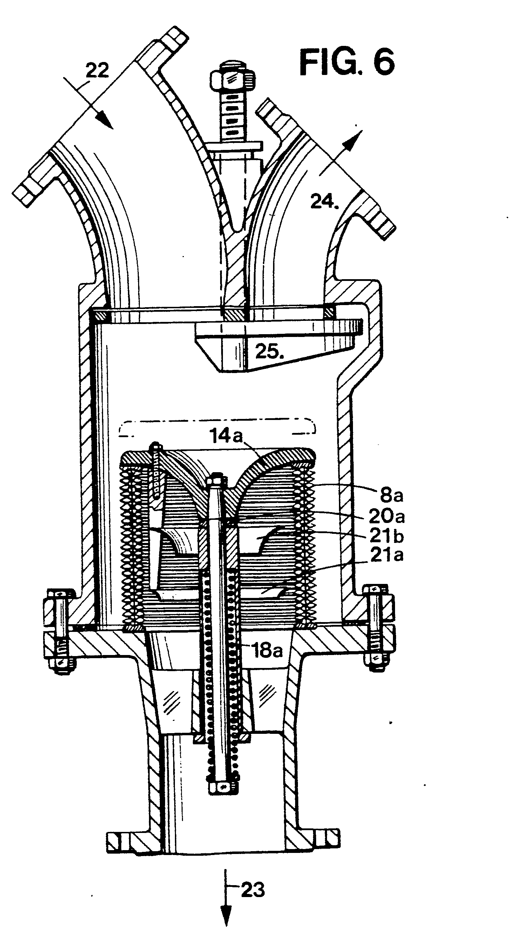

La figure 6 représente un corps filtrant 8a similaire à 8 de fig. 5, dans le cas d'un filtre sous pression. Pour simplifier on n'a pas représenté les éléments d'espacement (6 sur fig. 4).

En phase de filtration, le liquide à filtrer arrive en 22 et sort filtré en 23. Une sortie de purge, utilisée seulement pour le nettoyage à contre-courant, est prévue en 24.

Les organes sont représentés en position de filtration, où une vanne rotative 25 ferme la purge 24 et ouvre l'arrivée d'eau à filtrer en 22. La pression d'un ressort 18a fait buter une pièce d'appui 14a contre une butée et les éléments ou anneaux de filtration du corps 8a sont en position exacte de filtration. La filtration a lieu de façon centripète.

Pour passer au nettoyage, on actionne la vanne 25 pour fermer l'arrivée d'eau en 22 et ouvrir la purge en 24. Par ailleurs, on laisse revenir en arrière le liquide filtré à la partie inférieure, en sens inverse de la flèche 23, pour assurer le nettoyage. Sous l'effet combiné de la pression due à ce retour et à l'élasticité des organes d'espacement élastiques comprimés pendant la filtration, la pièce d'appui 14 est repoussée vers le haut de la quantité voulue, à l'encontre de l'action du ressort 18a qui alors se comprime pour limiter la course lorsque ses spires se touchent. Dans cet exemple, il est prévu deux déflecteurs 21a, 21b, au lieu d'un seul dans le cas de la fig. 5, pour améliorer encore le nettoyage.

Dès que l'on ramène la vanne 25 dans la position représentée, une nouvelle phase de filtration recommence automatiquement.

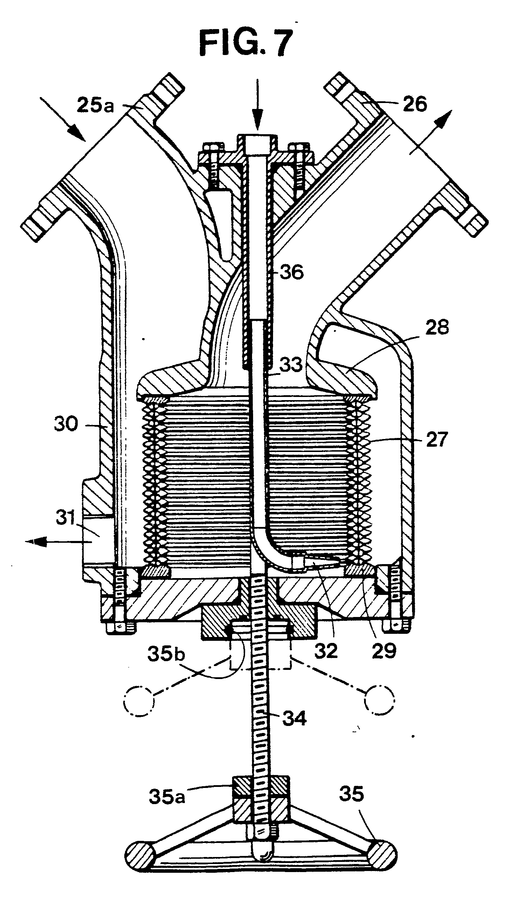

La forme d'exécution selon fig. 7 est raccordée à une conduite d'arrivée de liquide à filtrer, par une bride d'entrée 25a tandis qu'elle est reliée à une conduite de départ de liquide filtré, par une bride de sortie 26. De même que dans l'exemple précédent, on n'a pas représenté les éléments d'espacement élastiques disposés entre les éléments de filtrations annulaires, mais il doit être entendu que dans tous les exemples, on retrouve la même disposition constructive visible sur les fig. 3 et 4.

Le corps cylindrique 27 formé par l'ensemble des éléments de filtration annulaires tels que 1, avec leurs éléments d'espacement 6 (fig. 3 et 4) est disposé entre deux appuis fixes 28, 29 prévus dans une chambre 30 où est disposé ce corps. La distance de ces deux appuis est telle que les éléments filtrants soient en position de filtration. La filtration a lieu de façon centripète.

Pour faire le nettoyage, il est prévu les moyens suivants. Une purge 31 permet de vider la chambre 30 après qu'on a fermé l'entrée (25a) et la sortie (26) du filtre.

Dans l'axe de la chambre 30 et du corps 27 est disposée une buse radiale 32 portée à l'extrémité inférieure d'un tube axial 33 solidaire d'une tige filetée axiale 34 solidaire d'un volant d'actionnement 35. Ce volant est déplaçable entre une position supérieure (de filtration), montrée en traits mixtes et la position inférieure (de fin de nettoyage) représentée en traits pleins. Le tube 33 peut tourner et coulisser dans un tube de guidage fixe 36 par lequel on fait arriver du liquide sous pression qui sert au nettoyage.

Le jet sortant de la buse 32 exerce sur la région de l'intérieur du corps 27 qu'il frappe, une pression suffisante pour obliger la partie des disques contigus de cette région à s'écarter de façon localisée, permettant ainsi au jet de nettoyer cette région du filtre, après quoi le liquide de nettoyage chargé de la matière qui avait été retenue par le filtre, s'en va par la purge. En faisant tourner le volant 35 à une vitesse convenable, on nettoie de proche en proche tout le tour d'une fente puis une fente après l'autre. Après cela, le volant étant arrivé dans sa position inférieure représentée en traits pleins, on le ramène en haut contre le filtre (pour étancher à vis par coopération de la pièce 35a avec le joint O-Ring 35b), on arrête l'arrivée du liquide de nettoyage, on ferme la vanne de purge et on ouvre les vannes (entrée-sortie) que l'on avait fermées, et ainsi une nouvelle phase de filtration commence.

Le calcul montre que l'on peut doubler la largeur d'une fente entre les anneaux, à l'endroit frappé par le jet, en ne répartissant que 10% de l'effort sur les autres liaisons souples.

Un tel filtre peut être monté seul ou en duo lorsqu'on désire une filtration sans interruption. En effet, le débit instantané de liquide de nettoyage est faible et l'opération de nettoyage est plus longue que dans les exemples précédents. Cette forme d'exécution a l'avantage de pouvoir être montée en aspiration aussi bien que sur conduite sous pression.

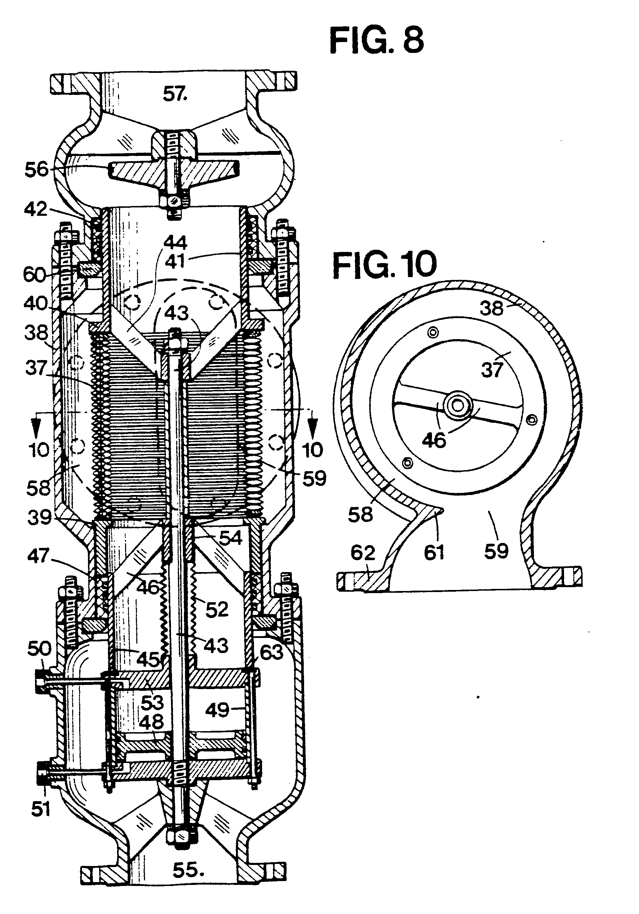

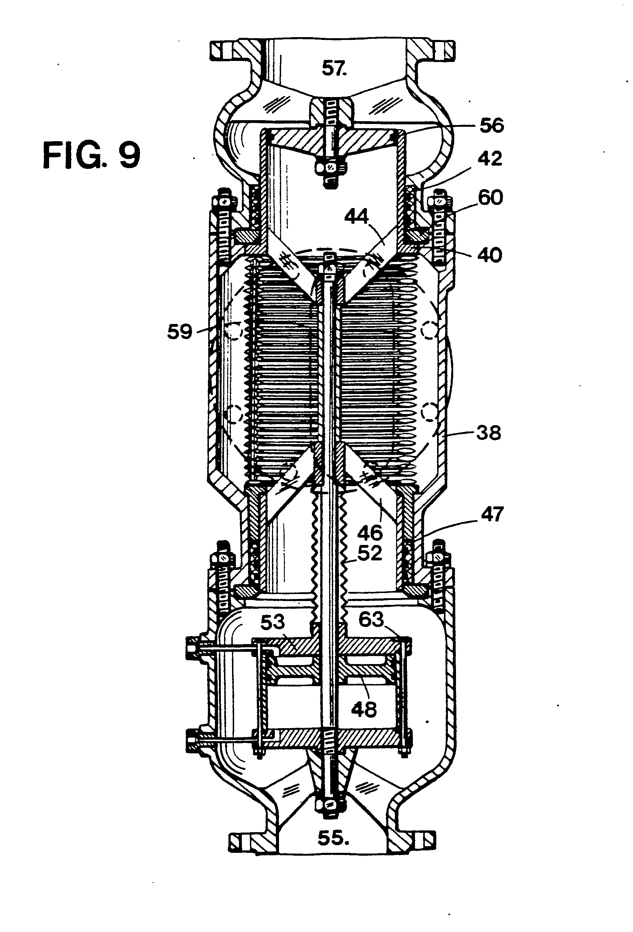

La forme d'exécution suivante est représentée en phase de filtration sur la fig. 8 et en phase de nettoyage sur la fig. 9. Le corps filtrant 37 est analogue à celui des exemples décrits en référence aux fig. 3 à 6, c'est-à-dire que sa longueur (axiale) varie entre un minimum correspondant à la filtration (fig. 8) et un maximum correspondant au nettoyage (fig. 9). Ici aussi, pour simplifier le dessin, on n'a pas décrit les éléments d'espacement 6 de fig. 3 et 4, qui sont présents dans toutes les formes d'exécution décrites.

A l'inverse des formes d'exécution précédentes, la filtration (fig. 8) a lieu de façon centrifuge dans le corps filtrant 37 et le nettoyage de façon centripète.

Le corps filtrant 37 est disposé à intérieur d'une enveloppe coaxiale 38, entre une butée 39 fixe par rapport à ce corps et une butée mobile 40 solidaire d'un manchon cylindrique 41 glissant axialement de façon étanche dans une partie 42 fixe par rapport à l'enveloppe 38. Ce manchon 41 est solidaire d'une tige de commande axiale 43, grâce à des bras radiaux 44. Un autre manchon cylindrique 45 est solidaire de la tige de commande axiale 43, grâce à des bras radiaux 46. Ce manchon 45 glisse de façon étanche dans une partie 47 fixe par rapport à l'enveloppe 38.

La tige de commande 43 est solidaire d'un piston 48 glissant dans un cylindre 49 fixe par rapport à l'enveloppe 38. On voit en 50 un conduit débouchant dans le cylindre 49, au-dessus du piston 48. Un autre conduit 51 débouche dans le cylindre 49, au-dessous du piston 48.

Un soufflet d'étanchéité 52 est disposé autour de la tige de commande 43 et est fixé, à une extrémité, sur un fond fixe 53 du cylindre à travers lequel fond passe la tige 43, et à son autre extrémité sur une partie 54 solidaire de la tige 43.

En position de filtration, le bord inférieur du manchon 45 appuie contre un anneau d'étanchéité 63 fixe sur le fond 53 et ferme ainsi la communication entre l'intérieur du corps 37 et un conduit d'évacuation 55 dont le rôle est indiqué plus loin.

Dans cette position, le manchon 41 est en position inférieure, où sa partie supérieure est distante d'une pièce cylindrique fixe 56 qui sert à fermer l'arrivée 57 du liquide à filtrer, lorsque le manchon 41 coopère avec elle.

Le fonctionnement de cette dernière forme d'exécution est le suivant.

En position de filtration selon fig. 8, le liquide à filtrer entre en 57, pénètre dans la chambre centrale du corps 37, passe entre les éléments de filtration annulaire de ce corps, atteint la chambre annulaire 58 comprise entre l'enveloppe 38 et l'extérieur du corps 37 et de là gagne la sortie 59 du liquide filtré. Pendant ce temps, un fluide sous pression arrivé en 50 et qui avait amené le piston 48 en position inférieure, continue d'agir sur ce piston et le maintient en position de filtration. L'évacuation en 51 est alors ouverte.

Pour passer en phase de nettoyage, on inverse la commande du piston 48, c'est-à-dire qu'on relie 51 à l'arrivée de fluide sous pression en même temps qu'on met 50 à l'évacuation. Le piston passe alors dans sa position supérieure et les organes prennent la position que montre la fig. 9. Les organes d'espacement élastiques (6 sur fig. 3 et 4) étant comprimés agissent dans le même sens que le piston 48 et la butée 40 se déplace vers le haut jusqu'à l'arrêt constitué par un anneau fixe 60. Les éléments de filtration sont alors en position écartée de filtration et le manchon 41 coopère avec 56 pour fermer de façon étanche l'arrivée dans le filtre de liquide à filtrer qui pourrait venir de 57. De son côté, le manchon 45 s'est éloigné du joint 55 et la communication est ouverte entre l'intérieur du corps 37 et l'évacuation 55, tandis qu'on laisse entrer du liquide de nettoyage en 59.

Il est prévu en 59 un déflecteur 61 qui oblige le liquide entrant dans la chambre annulaire 58 à prendre un mouvement de rotation enveloppant le corps 37 sur toute sa longueur. En effet, la forme de la section de passage de 59 passe, de la forme circulaire dans la bride 62, à une forme allongée d'étendue égale à la longueur du corps 37 en extension maximum. De ce fait, le liquide de nettoyage passe de façon uniforme sur tout le pourtour et sur toute la longueur du corps 37, à travers les fentes, maintenant élargies, existant entre les anneaux de filtration. Un nettoyage complet et uniforme du corps 37 est ainsi assuré.

On remarquera que le manchon 41 et la partie cylindrique fixe 56 coopérante sont agencés de façon que, par souci d'efficacité et de sécurité, ces fentes ne s'ouvrent pour le nettoyage que lorsque le contre-courant de nettoyage est déjà amorcé.

On remarquera encore que dans les exemples de filtres représentés et décrits, on a visé à réaliser un corps filtrant doté d'un efficacité et d'un nettoyage les meilleurs possibles, plutôt que de chercher à augmenter la surface filtrante en vue d'assurer un débit maximum. La priorité a été donnée aux considérations d'ordre hydraulique en ce qui concerne le circuit de nettoyage par contre-courant, plutôt qu'au circuit de filtration, pour avoir la meilleure répartition possible lors du back-wash et être ainsi assuré de bien nettoyer toutes les fentes du corps filtrant. En effet, ce qui est essentiel, c'est qu'à chaque phase de nettoyage le filtre soit nettoyé dans toutes ses parties pour pouvoir fonctionner efficacement dans chaque phase de nettoyage consécutive.

**Revendications**

1. Filtre à disques pour liquides, du type à nettoyage à contre-courant et comprenant une série d'éléments de filtration (1) de forme annulaire, coaxiaux, entre lesquels sont disposés localement des éléments d'espacement (6) en matière élastiquement déformable à volume constant, pour que ces éléments de filtration laissent entre eux des fentes ou passages de filtration annulaires (2), caractérisé en ce que les éléments d'espacement (6) ont la forme d'une bille en forme d'une sphère tronquée de deux calottes symétriques, dont la base a une section plus grande que la section d'un canal axial (7) parallèle à l'axe commun des éléments de filtration prévu dans les billes pour se fermer lorsqu'on comprime axialement ces organes d'espacement; en ce que les éléments de filtration (1) présentent sur leurs faces en regard des alvéoles (5) pour recevoir chacun exactement une partie d'un élément d'espacement (6) et assurer à eux seuls le positionnement latéral réciproque des éléments de filtration (1) et des éléments d'espacement (6); et en ce que les éléments de filtration (1) présentent, en section transversale, une forme lenticulaire, hydrodynamique, et déterminent entre eux des passages de filtration (2) de section décroissante (fig. 1), des moyens étant prévus pour faire varier la distance entre les éléments de filtration (1), par variation d'une pression exercée sur ces éléments parallèlement à leur axe commun et déformation élastique des éléments d'espacement (6), sans friction.

2. Filtre selon la revendication 1 dans lequel la filtration se fait par circulation centripète du liquide, caractérisé en ce qu'il comporte au moins un déflecteur annulaire (21; 21a, 21b) de régularisation du nettoyage disposé axialement dans l'espace cylindrique limité par les éléments de filtration (1).

3. Filtre selon la revendication 1, dans lequel le nettoyage se fait par circulation centripète du liquide, caractérisé en ce qu'il comporte une paroi ou enveloppe (38) limitant autour de lui et sur toute sa longueur une chambre annulaire (58), un orifice (59) reliant cette chambre à l'extérieur et qui s'étend pratiquement sur toute la longueur de l'ensemble des éléments de filtration, un déflecteur (61) de mise en rotation du 'liquide de nettoyage étant disposé à l'endroit de cet orifice (59).

4. Filtre selon la revendication 1, et dans lequel la filtration est centripète, caractérisé en ce qu'il comporte une buse (32) de nettoyage à contrecourant, montée sur un support (33, 34, 35) capable de tourner hélicoïdalement, dans l'espace cylindrique (corps 27) limité par l'ensemble des éléments filtrants (1), autour de l'axe de cet ensemble, pour que, lors du nettoyage et alors que le filtre a été préalablement vidé, il se produise, à l'endroit où le jet sortant de la buse frappe ledit ensemble, une pression qui écarte localement les parties de deux éléments de filtration voisins en même temps que ce liquide assure le nettoyage en passant à l'endroit de cet écartement.

5. Filtre selon l'une des revendications précédentes, caractérisé en ce que les alvéoles (5) sont prévus par paires coaxiales sur les deux faces des éléments de filtration (1), les deux alvéoles coaxiaux de chaque paire communiquant entre eux par leur fond et les éléments d'espacement (6) disposés dans ces deux alvéoles étant en contact l'un avec l'autre par leurs parties supérieure et inférieure.

6. Filtre selon la revendication 5, caractérisé en ce que les éléments d'espacement (6) sont disposés coaxialement selon des axes parallèles à l'axe commun des éléments de filtration (1) at espacés angulairement autour de cet axe commun.

**Patentansprüche**

1. Scheibenfilter für Füssigkeiten mit Gegenstrom-Reinigung, welcher eine Reihe von koaxial angeordneten, ringförmigen Filterelementen (1) aufweist, die durch Zwischenelemente (6) aus, bei konstantem Volumen, elastisch deformierbarem Material voneinander getrennt sind, sodass sich zwischen den Filterelementen ringförmige Filter-Spalten oder Filter-Wege (2) bilden, dadurch gekennzeichnet, dass die Zwischenelemente (6) die Form einer beidseitig symmetrisch abgeplatteten Kugel haben, wobei die Basisfläche der Kalotten grösser ist, als der Querschnitt eines Kanals (7) welcher zur gemeinsamen Achse der in den Kugeln angeordneten Filterelemente (1) parallel ist, und der sich schliesst, wenn die Zwischenelemente axial zusammendrückt werden, und dassdie Filterelemente (1) nach den Zellen (5) ausgericht sind, sodass jedes exakt einen Teil eines Zwischenelementes (6) umfasst, und allein die gegenseitige seitliche Lage von Filterelementen (1) und Zwischenelementen (6) bestimmen, und dass die Filterelemente (1) im Querschnitt eine hydrodynamische Linsenform annehmen und zwischen sich Filterwege (2) von abnehmendem Querschnitt bilden (Fig. 1), und dass Mittel zum Aendern des Abstandes zwischen den Filterelementen (1) vorgesehen sind, indem ein auf diese Elemente ausgeübter, zur gemeinsamen Achse paralleler Druck verändert wird, und wodurch die Zwischenelemente (6) elastisch und reibungsfrei deformiert werden.

2. Filter nach Patentanspruch 1, in welchem die Filtrierung durch zetripetale Zirkulation der Flüssigkeit erfolgt, dadurch gekennzeichnet, dass dieser mindestens ein ringförmiges Leitelement (21, 21a, 21b) für die Regelung der Reinigung der Vorrichtung enthält, welches axial im zylindrischen Raum, der durch die Filterelemente (1) begrenzt ist, angeordnet ist.

3. Filter nach Patentanspruch 1, in welchem die Reinigung durch zentripetale Zirkulation der Flüssigkeit erfolgt, dadurch gekennzeichnet, dass er eine Wand oder eine Hülle (38) enthält die um ihn herum und auf seiner gesamten Länge eine ringförmige Kammer (38) begrenzt, und eine Oeffnung (59) welche diese Kammer nach aussen verbindet und sich praktisch über die gesamte Länge der Anordnung der Filterelemente erstreckt und ein Leitelement (61) für die Reinigungsflüssigkeit, welches in der Nähe dieser Oeffnung (59) angeordnet ist.

4. Filter nach Patentanspruch 1 und in welchem die Filtrierung zentripetal erfolgt, dadurch gekennzeichnet, dass er eine Gegenstrom-Reinigungsdüse (32) enthält, die auf einem Träger (33, 34, 35) montiert ist und der im zylindrischen Raum (Körper 27), der durch die Gesamtheit der Filterelemente (1) begrenzt ist schraubenförmig um die Achse dieser Filtereinheit drehbar ist, sodass während der Reinigung und nachdem der Filter zuvor geleert wurde, dort wo der Strahl aus der Reinigungsdüse auf die Anordnung trifft, ein Druck entsteht der örtlich die zwei benachbarten Filterelemente auseinandertreibt, während die Flüssigkeit die Reinigung gewährleistet, indem sie durch die entstehende Spalte fliesst.

5. Filter nach einem der vorhergehenden Patentansprüche, dadurch gekennzeichnet, dass die Zellen (5) paarweise koaxial auf den zwei Oberflächen der Filterelemente (1) angeordnet sind, und dass die zwei koaxialen Zellen jedes Paares unter sich, durch ihren Boden und die Trennelemente (6) verbunden sind, welche in diesen beiden Zellen, durch ihre oberen und unteren Teile in Verbindung stehen.

6. Filter nach Patentanspruch 5, dadurch gekennzeichnet, dass die Zwischenelemente (6) unter sich koaxial und achsenparallel zur gemeinsamen Achse der Filterelemente (1) und winkelmässig voneinander getrennt um diese gemeinsame Achse angeordnet sind.

## Claims

1. A disc filter for liquids, of the type with counter-flow cleaning and comprising a set of coaxial annular filter elements (1) between which spacer elements (6), made of an elastically deformable material of constant volume, are locally arranged so that these filter elements leave annular filtration passages or slits (2) between them, characterised in that the spacer elements (6) are in the shape of a ball in the form of a truncated sphere with two symmetrical caps, the base of which has a larger section than an axial channel (7) parallel to the common axis of the filter elements, provided in the balls so as to close when these spacer members are axially compressed; in that the filter elements, (12) possess, on their opposite faces, cells (5) each for exactly accommodating part of a spacer element (6) and for ensuring by themselves the mutual lateral positioning of the filter elements (1) and the spacer elements (6); and in that the filter elements (1) have a hydrodynamic lenticular shape in cross-section and between them define filtration passages (2) of decreasing section (Figure 1), means being provided for varying the distance between the filter elements (1) by varying a pressure exerted on these elements parallel to their common axis and by elastic deformation of the spacer elements (6) without friction.

2. The filter according to Claim 1, in which filtration takes place by centripetal circulation of the liquid, characterised in that it has at least one annular deflector (21, 21a, 21b) for regulating the cleaning, which is arranged axially in the cylindrical space bounded by the filter elements (1).

3. The filter according to Claim 1, in which cleaning is carried out by centripetal circulation of the liquid, characterised in that it has a wall or envelope (38) which delimits an annular chamber (58) around the said filter and over the whole of its length, an orifice (59) connecting this chamber to the outside and extending over practically the whole length of the assembly of filter elements, and a deflector (61), for causing the cleaning liquid to rotate, being arranged at the location of this orifice (59).

4. The filter according to Claim 1, in which filtration is centripetal, characterised in that it has a nozzle (32) for counter-flow cleaning, which is fitted on a support (33, 34, 35) capable of rotating helically, in the cylindrical space (body 27) bounded by the assembly of filter elements (1), around the axis of this assembly, so that, during cleaning and when the filter has been emptied beforehand, a pressure is produced at the point where the jet leaving the nozzle strikes the said assembly, this pressure locally separating the parts of two adjacent filter elements at the same time as this liquid ensures cleaning by passing through the gap.

5. The filter according to one of the preceding claims, characterised in that the cells (5) are provided in coaxial pairs on the two faces of the filter elements (1), the two coaxial cells of each pair communicating with one another at the bottom, and the spacer elements (6), arranged in these two cells, being in contact with one another at their upper and lower parts.

6. The filter according to Claim 5, characterised in that the spacer elements (6) are arranged coaxially along axes parallel to the common axis of the filter elements (1) and angularly spaced out around this common axis.

0 057 670

**FIG. 1**

**FIG. 2**

**FIG. 3**

**FIG. 4**

1

# FIG. 5

**0 057 670**

FIG. 6

# FIG. 7

# FIG. 8

# FIG. 10

FIG. 9